# EUROPEAN PATENT SPECIFICATION

(11) **EP 4 332 876 B1**
(45) Date of publication and mention of the grant of the patent: **02.10.2024**
(21) Application number: 22192776.7
(22) Date of filing: 30.08.2022
(51) Int. Cl.: G06T 3/4053, G06T 3/4046

(54) **METHOD AND SYSTEM FOR CONSTRUCTING A DIGITAL COLOR IMAGE DEPICTING A SAMPLE**
VERFAHREN UND SYSTEM ZUR KONSTRUKTION EINES DIGITALEN FARBBILDES MIT DARSTELLUNG EINER PROBE
PROCÉDÉ ET SYSTÈME DE CONSTRUCTION D'UNE IMAGE COULEUR NUMÉRIQUE REPRÉSENTANT UN ÉCHANTILLON

(43) Date of publication of application: 06.03.2024
(73) Proprietor: CellaVision AB, 223 62 Lund (SE)
(72) Inventor: Almers, Martin, 226 51 Lund (SE); Hedlund, Sven, 247 72 Genarp (SE); Jönsson, Jesper, 223 59 Lund (SE)
(74) Representative: AWA Sweden AB

(56) References cited:
- WO-A1-2019/103909
- CN-A- 108 648 144
- LEI TIAN ET AL: "Deep learning in biomedical optics", ARXIV.ORG, CORNELL UNIVERSITY LIBRARY, 201 OLIN LIBRARY CORNELL UNIVERSITY ITHACA, NY 14853, 23 May 2021 (2021-05-23), XP081968093, DOI: 10.1002/LSM.23414
- MICHAEL R KELLMAN ET AL: "Physics-based Learned Design: Optimized Coded-Illumination for Quantitative Phase Imaging", ARXIV.ORG, CORNELL UNIVERSITY LIBRARY, 201 OLIN LIBRARY CORNELL UNIVERSITY ITHACA, NY 14853, 10 August 2018 (2018-08-10), XP081097671
- DE HAAN KEVIN ET AL: "Deep-Learning-Based Image Reconstruction and Enhancement in Optical Microscopy", PROCEEDINGS OF THE IEEE, IEEE. NEW YORK, US, vol. 108, no. 1, 1 January 2020 (2020-01-01), pages 30 - 50, XP011763178, ISSN: 0018-9219, [retrieved on 20191227], DOI: 10.1109/JPROC.2019.2949575

## Description

### Technical field

The present inventive concept relates to a method and a device for training a machine learning model to construct a digital color image depicting a sample. The present inventive concept further relates to a method and a microscope system for constructing a digital color image depicting a sample.

### Background of the invention

In the field of digital microscopy, a typical task is to find and identify objects within a sample. For instance, within hematology, cytology and pathology, specific cell types may be found and identified in order to establish a diagnose for the patient from which the sample is taken.

There exist different techniques for imaging samples. One of the simplest forms of digital microscopy is bright-field microscopy where the sample is illuminated from below by white light and imaged from above. Contrast in the sample is created by attenuation of the transmitted light in denser areas of the sample. To increase the otherwise low contrast in images obtained by bright-field microscopy, the sample is typically colored by a staining agent. However, this technique is still limited in optical resolution. Further, the process of staining the sample comes with its own disadvantages, such as health hazardous chemicals, inaccuracy in the results as well as a time-consuming and costly process.

Bright-field microscopy also comes with a trade-off between resolution and size of a visible portion of the sample. High precision in the screening typically requires a large magnification of the sample, which allows cells to be imaged and analyzed. Hence, only a small portion of the sample is imaged at a time, and a large number of individual positions of the samples must therefore be imaged in order to screen the entire sample which leads to a time-consuming screening process. Thus, in order to reduce the time needed for screening, the number of imaged positions could be reduced. However, given that the entire sample is to be screened, this requires that the magnification is reduced, which, on the other hand, reduces the precision in the screening, leading to a screening process that may not properly find and identify cell types.

"Deep learning in biomedical optics" (Tian et al., ARXIV.ORG, 2021) relates to deep learning applications in biomedical optics with a particular emphasis on image formation.

CN108648144A relates to an FPM high-resolution color image reconstruction method based on a deep learning algorithm.

"Physics-based Learned Design: Optimized Coded-Illumination for Quantitative Phase Imaging" (R. Kellman et al., ARXIV.ORG, 2018) relates to coded-illumination which can enable quantitative phase microscopy of transparent samples with minimal hardware requirements.

"Deep-Learning-Based Image Reconstruction and Enhancement in Optical Microscopy" (De Haan et al., PROCEEDINGS OF THE IEEE, IEEE. NEW YORK, US, vol. 108, no. 1, 2020) relates to using deep neural networks to advance computational microscopy and sensing systems, also covering their current and future biomedical applications.

WO2019103909A1 relates to a method of imaging a sample using mobile phone having a camera includes securing an optomechanical attachment unit to the portable electronic device, the optomechanical attachment unit having a sample holder, one or more light sources, a lens or set of lenses, and a movable stage configured to move the sample relative to the camera.

A recently developed imaging technique is Fourier ptychographic microscopy (FPM) which offers both high resolution and wide field of view. In FPM, a LED array is used as the illumination source and a plurality of images of the sample are captured for different angles of illumination. The plurality of images can then be combined into one high-resolution image of the sample. However, as of now, FPM requires narrow-band light sources (i.e. light sources which emits light in a narrow range of wavelengths, such as single colored light sources) to be used. In order to capture color images of the sample, several sequences of images must be captured using different colored LEDs. For example, one set of images are captured with red LEDs, a second set of images are captured with green LEDs and a third set of images are captured with blue LEDs. The color image is then constructed by combining the three sets of images into one image. This is a time-consuming process since it means that several images (three in this example) must be captured for each angle of illumination. Further, the output lacks precision since the generated color image is not a true color image, and thus lacks information about the sample in parts of the light spectrum not covered by the light source.

Hence, there is a need for improvements within the art.

### Summary of the invention

It is an object to, at least partly, mitigate, alleviate, or eliminate one or more of the above-identified deficiencies in the art and disadvantages singly or in any combination and solve at least the above-mentioned problem.

The inventors of the present inventive concept have realized a way of using broad-band LEDs in Fourier ptychographic microscopy, FPM, to achieve a simple, accurate and effective method and microscopy system for imaging a sample with high resolution, broad field of view and in color.

According to a first aspect a method for training a machine learning model to construct a digital color image depicting a sample is provided. The method according to the first aspect comprises: acquiring a training set of digital images of a training sample by: illuminating, by a plurality of white light emitting diodes, the training sample with a plurality of illumination patterns, and capturing, for each illumination pattern of the plurality of illumination patterns, a digital image of the training sample; receiving a ground truth comprising a high-resolution digital color image of the training sample, wherein a resolution of the high-resolution digital color image is relatively higher than a resolution of at least one digital image of the training set of digital images; and training the machine learning model to construct the digital color image depicting a sample using the training set of digital images and the ground truth.

In other words, the method may be a method for training a machine learning model to construct a relatively high-resolution color image of a sample from one or more relatively low-resolution images of the sample.

It should be noted that the training set of digital images may comprise digital images of multiple training samples. Thus, the training set of digital images may comprise one or more sets of images for one or more training samples.

The wording "training" as in "training sample" is herein used to refer to a sample used during training, as opposed to a general sample which the machine learning model is trained to construct a digital color image of. The machine learning model may of course be able to construct a digital color image depicting the training sample. However, the machine learning model may also be able to construct digital color images of other samples as well, which may not be part of the training set of digital images. Put differently, the machine learning model may, after training, be able to construct digital color images of samples not used for training the machine learning model. Thus, the machine learning model is trained (using training sample(s)) to construct digital color images of any sample. The wording "the sample" may be used herein to refer to either the samples used during training or the samples inputted into the trained machine learning model, depending on the context, or when it's used to refer to either one.

Within the context of this disclosure, the wording "digital color image depicting a sample" should be construed as a computer-generated digital image of the sample in multiple colors, such as an RGB image. This digital color image may be similar, or even identical, to a high-resolution digital color image of the sample captured by use of conventional techniques, such as by use of a bright-field microscopy. Therefore, the constructed digital color image of the sample may replicate a high-resolution depiction of the sample, but in an improved way as will be set forth in the following disclosure.

Within the context of this disclosure, the wording "ground truth" should be construed as information that is known to be real and/or true. Hence, in this context, since a machine learning model being able to construct a high-resolution digital color image depicting a sample is trained using the ground truth and the training set of digital images, the ground truth may represent an actual high-resolution digital color image of the training sample. Such actual high-resolution digital color image of the training sample may be captured using conventional techniques, e.g., using bright-field microscopy.

Within the context of this disclosure, the wording "white light emitting diodes" should be construed as broad-spectrum light emitting diodes (LEDs). Put differently, the LEDs emits light in a broad spectrum of wave lengths, compared to narrow-spectrum LEDs, such as single-colored LEDs. White LEDs may be characterized in that they resemble sun light. The spectrum of the emitted light may cover a majority of the visible light spectrum, as opposed to individually colored LEDs. Typically, a white LED may comprise an LED configured to emit blue light and a fluorescent layer configured to convert the blue light emitted by the LED to white light.

Within the context of this disclosure, the wording "illumination patterns" may be construed as different ways of illuminating the sample by one or more of the plurality of white LEDs. The different illumination patterns may, e.g., be formed by illuminating the sample from one or more directions of a plurality of directions, and/or by varying the number of white LEDs of the plurality of white LEDs that emit light.

The machine learning model is trained to correlate the training set of digital images of the training sample to the ground truth (e.g., the high-resolution digital color image of the training sample). The machine learning model may be trained iteratively and/or recursively until a difference between an output of the machine learning model (i.e., the constructed digital color image depicting the sample) and the ground truth (i.e., the high-resolution digital color image of the training sample) is smaller than a predetermined threshold. A smaller difference between the output of the machine learning model and the ground truth may indicate a higher accuracy of the constructed digital color image depicting the sample provided by the machine learning model. Put differently, a smaller difference between the output of the machine learning model and the ground truth may indicate that the constructed digital color image depicting a sample may to a higher degree replicate a high-resolution digital color image of the sample. Hence, preferably, the difference between the output of the machine learning model and the ground truth may be minimized. The machine learning model may be trained to construct digital color images of samples for a plurality of different sample types. In such case, the machine learning model may, for each sample type, be trained using a training set of digital images of a training sample of the sample type, and a corresponding ground truth associated with the respective sample type.

By illuminating the sample with a plurality of illumination patterns and capturing a digital image for each illumination pattern of the plurality of illumination patterns, information regarding finer details of the sample may be captured than what normally is resolvable by a conventional microscope (i.e., using a conventional microscope illumination such as a bright-field illumination pattern) used to image the sample. This can be understood as different portions of Fourier space (i.e., the spatial frequency domain) associated with the sample are imaged for different illumination directions. This technique may be known in the art as Fourier Ptychographic Microscopy, FPM. Further, by illuminating the sample with a plurality of illumination patterns and capturing a digital image for each of the plurality of illumination patterns, information regarding a refractive index (or a spatial distribution of a refractive index) associated with the sample may be captured. This can be understood as an effect of refraction of light being dependent on an angle of incident for light illuminating the sample and the refractive index of the sample. Information regarding the refractive index of the sample may, in turn, allow phase information (typically referred to as quantitative phase within the art) associated with the sample to be determined. Since the plurality of digital images comprises information associated with one or more of fine details of the sample, a refractive index associated with the sample, and phase information associated with the sample, this information may be used in the training of the machine learning model, which may, in turn, allow for a machine learning model being trained to more accurately construct the digital color image depicting the sample than what would be allowed in case the plurality of digital images were captured from only one direction or by using conventional microscopy. Using conventional microscopy (e.g., by illuminating the sample from a majority of the plurality of illumination patterns up to a numerical aperture of the microscope objective used to image the sample), it may be difficult, or even impossible, to capture information associated with the refractive index associated with the sample and/or phase information associated with the sample. Put differently, since an image captured using conventional microscopy may contain information regarding the refraction of light impinging from all directions (or at least a majority) of the plurality of directions, it may be impossible using such techniques to determine how the light from a specific direction is refracted by the sample. Thus, it may not be possible to determine information associated with the refractive index of the sample using conventional microscopy. Illuminating the sample with a plurality of illumination patterns may further allow for capturing information relating to details of the sample which are finer than what normally is allowed by a microscope objective used to capture the digital images of the sample. Thus, a microscope objective having a relatively lower magnification may be used while still being able to capture information related to fine details of the sample. Using a relatively lower magnification microscope objective may, in turn, allow for digital images of larger portions of the sample to be captured at each imaging position. Hence, the entire sample may be scanned by capturing digital images at relatively fewer positions which, in turn, may allow for a faster scanning of the sample. Further, the additional information captured from the sample allows for the machine learning model to construct, from a set of digital images, the digital color image at a higher resolution than what the microscope objective used to capture the set of digital images of the sample is capable of when using conventional microscopy illumination (e.g., bright-field illumination).

Hence, the present inventive concept allows for training a machine learning model to construct a digital color image replicating a sample in relatively high resolution using a plurality of digital images of the sample in relatively low resolution. Hence, by using the trained machine learning model, a digital color image depicting a sample may be constructed without having to use a microscope objective having a relatively high magnification.

Further, the machine learning model allows the training set of digital images of the training sample to be captured using white light emitting diodes, i.e. broad-band light emitting diodes, as opposed to the prior art. This reduces the number of images which need to be taken in order to produce a relatively high-resolution digital color image of the sample and may simplify the hardware requirements. Further, using white light (i.e. broad-spectrum light) allows for more information about the sample to be captured, which otherwise would be missed in parts of the spectrum not covered when using traditional narrowband light sources.

At least one digital image of the training set of digital images may be captured using a first microscope objective. The act of receiving the ground truth may comprise: illuminating the training sample with a bright-field illumination pattern; and capturing, using a second microscope objective, the high-resolution digital color image of the training sample while the training sample is illuminated with the bright-field illumination pattern. A numerical aperture of the second microscope objective may be higher than a numerical aperture of the first microscope objective. Put differently, a magnification of the second microscope objective may be higher than a magnification of the first microscope objective.

Herein, the wording "bright-field illumination pattern" refers to the common technique of bright-field microscopy where the sample is imaged when illuminated from below. Hence, the ground truth may be acquired by bright-field microscopy. The bright-field illumination pattern may be formed using a conventional microscopy illumination source. The bright-field illumination pattern may be formed by simultaneously illuminating the training sample (or sample) with a majority of the white light emitting diodes of the plurality of white light emitting diodes. For instance, the bright-field illumination pattern may be formed by simultaneously illuminating the training sample (or sample) with all (or almost all) white light emitting diodes of the plurality of white light emitting diodes.

Having the high-resolution digital color image of the ground truth captured by a microscope objective having a higher numerical aperture than the training set was captured with, the machine learning model may be trained to replicate the sample in a relatively high-resolution image from a set of relatively low-resolution images.

Each white light emitting diode of the plurality of white light emitting diodes may be configured to illuminate the training sample from one direction of a plurality of directions.

The illumination patterns of the plurality of illumination patterns may be formed by turning on (i.e., emitting light from) one or more of the plurality of white light emitting diodes. Hence, each illumination pattern may be formed by simultaneously illuminating the training sample from one or more directions of the plurality of directions.

A possible associated advantage is that the different illumination patterns may be formed without having to physically move any parts of a device used to capture the images of the sample, or the sample itself.

At least one digital image of the training set of digital images may be captured using a first microscope objective, and wherein at least one direction of the plurality of directions may correspond to an angle larger than a numerical aperture of the first microscope objective.

The numerical aperture of a microscope objective may be a dimensionless number associated with a range of angles over which the microscope objective accepts light. Hence, a direction larger than the numerical aperture of a microscope objective may be understood as a direction corresponding to an angle larger than the range of angles over which the microscope objective accepts light.

By illuminating the training sample from a direction corresponding to an angle larger than the numerical aperture of a microscope objective, the digital image captured for that angle of illumination may comprise information about higher spatial frequencies of the training sample, and thereby finer details of the training sample, than the microscope objective normally allows (i.e., using conventional microscopy illumination). This may, in turn, allow for the microscope objective to capture phase information associated with the training sample and information relating to details of the training sample not normally being resolvable by the microscope objective, which may be used in the training of the machine learning model. Put differently, by illuminating the training sample from a direction corresponding to an angle larger than the numerical aperture of the microscope objective may allow for an improved training the machine learning model to construct a digital color image depicting the sample.

According to a second aspect, a method for constructing a digital color image depicting a sample is provided. The method according to the second aspect comprises: receiving an input set of digital images of the sample, wherein the input set of digital images is acquired by illuminating, by a plurality of white light emitting diodes, the sample with a plurality of illumination patterns and capturing, for each illumination pattern of the plurality of illumination patterns, a digital image of the sample; constructing a digital color image depicting the sample by: inputting the input set of digital images into a machine learning model being trained according to the method of the first aspect, and receiving, from the machine learning model, an output comprising the constructed digital color image depicting a sample, wherein a resolution of the constructed digital color image is relatively higher than a resolution of at least one digital image of the input set of digital images.

By inputting the input set of digital images into a machine learning model trained according to the method of the first aspect, the process of imaging the sample in color and at relatively high resolution may be more efficient, since a digital color image depicting the sample at a relatively high resolution (compared to the microscope objective used to capture the input set of digital images) can be output from the trained machine learning model using digital images of the sample captured while the sample is illuminated by white light. This allows for a reduction in the number of digital images which need to be captured when constructing a relatively high-resolution digital color image, in particular in comparison with FPM. It further improves the precision of the imaging since the constructed image is not just a combination of three separate color images (which would be the case for FPM). Further, the constructed image may contain more information about the sample, compared to the conventional way of forming color images from three separate color images, since the latter ones misses information in parts of the light spectrum not covered by the individually colored light sources.

The act of receiving the input set of digital images of the sample may comprise: acquiring the input set of digital images of the sample by: illuminating, by a plurality of white light emitting diodes, the sample with a plurality of illumination patterns, and capturing, for each illumination pattern of the plurality of illumination patterns, a digital image of the sample.

Each white light emitting diode of the plurality of white light emitting diodes may be configured to illuminate the sample from one direction of a plurality of directions.

Each digital image of the input set of digital images may be captured using a microscope objective, and wherein at least one direction of the plurality of directions may correspond to an angle larger than a numerical aperture of the microscope objective.

The above-mentioned features of the first aspect, when applicable, apply to this second aspect as well. In order to avoid undue repetition, reference is made to the above.

According to a third aspect, a device for training a machine learning model to construct a digital color image depicting a sample is provided. The device comprises circuitry configured to execute: a first receiving function configured to acquire a training set of digital images of a training sample, wherein the received training set of digital images is formed by: illuminating, by a plurality of white light emitting diodes, the training sample with a plurality of illumination patterns, and capturing, for each illumination pattern of the plurality of illumination patterns, a digital image of the training sample; wherein the circuitry is further configured to execute: a second receiving function configured to receive a ground truth comprising a high-resolution digital color image of the training sample, wherein a resolution of the high-resolution digital color image is relatively higher than a resolution of at least one digital image of the training set of digital images; and a training function configured to train the machine learning model to construct the digital color image depicting a sample using the training set of digital images and the ground truth.

The above-mentioned features of the first aspect and/or the second aspect, when applicable, apply to this third aspect as well. In order to avoid undue repetition, reference is made to the above.

According to a fourth aspect, a microscope system is provided. The microscope system comprising: an illumination system comprising a plurality of white light emitting diodes and configured to illuminate a sample with a plurality of illumination patterns; an image sensor configured to capture digital images of the sample; a microscope objective configured to image the sample onto the image sensor; and circuitry configured to execute: an acquisition function configured to acquire an input set of digital images by being configured to: control the plurality of white light emitting diodes of the illumination system to illuminate the sample with each illumination pattern of the plurality of illumination patterns, and control the image sensor to capture a digital image of the sample for each illumination pattern of the plurality of illumination patterns, and wherein the circuitry is further configured to execute: an image construction function configured to: input the input set of digital images into a machine learning model being trained according to the method of the first aspect, and receive, from the machine learning model, an output comprising a constructed digital color image depicting the sample; wherein a resolution of the constructed digital color image is relatively higher than a resolution of at least one digital image of the input set of digital images.

Each of the plurality of white light emitting diodes may be configured to illuminate the sample from one direction of a plurality of directions.

At least one direction of the plurality of directions may correspond to an angle larger than a numerical aperture of the microscope objective.

The plurality of white light emitting diodes may be arranged on a curved surface being concave along at least one direction along the surface.

Arranging the plurality of white light emitting diodes on a curved surface may be advantageous in that the distance from each white light emitting diode to a current imaging position (i.e., a position or portion of the sample currently being imaged) of the microscope system may be similar. Since this distance is similar, an intensity of light emitted from each white light emitting diode may be similar at the current imaging position. This may be understood as an effect of the inverse square law. Thus, the sample may be illuminated by light having similar intensities from each white light emitting diode, which may, in turn, allow for a more homogenous illumination of the sample independent of illumination direction. It may be advantageous to configure the illumination system such that the distance from each white light emitting diode to the current imaging position is large enough such that each white light emitting diode may be treated as a point source. The distance from each white light emitting diode to the current imaging position may be chosen such that an intensity of light from each white light emitting diode at the current imaging position is high enough to produce the input set of digital images.

The curved surface may be formed of facets. Put differently, the curved surface may be constructed by a plurality of flat surfaces. Thus, the curved surface may be a piecewise flat surface.

An associated advantage is that the illumination system may be easier to manufacture, thereby reducing associated economic costs.

A further associated advantage is that the illumination system may be modular. It may thereby be easier to replace one or more light sources (e.g., in case they break and/or are defective).

A numerical aperture of the microscope objective may be 0.4 or lower. Put differently, the microscope objective may have a magnification of 20 times or lower.

An associated advantage is that a larger portion of the sample may be imaged at a time compared to a microscope objective having a higher numerical aperture. This may, in turn, allow for a number of individual imaging positions needed to image a majority of the sample to be reduced. Thus, a time needed to image a majority of the sample may thereby be reduced. This may, in particular, be advantageous since the machine learning model is trained to construct a digital color image having a relatively higher resolution than the digital images input to the machine learning model (i.e., the digital images of the input set). Hence, a large portion (or an entirety) of the sample may be imaged more quickly, while the digital color image depicting the sample may have a resolution relatively higher than what the microscope objective normally allows (using conventional microscopy illumination).

The above-mentioned features of the first aspect, the second aspect, and/or the third aspect, when applicable, apply to this fourth aspect as well. In order to avoid undue repetition, reference is made to the above.

According to a fifth aspect a non-transitory computer-readable storage medium is provided. The non-transitory computer-readable storage medium comprising program code portions which, when executed on a device having processing capabilities, performs the method according to the second aspect.

The above-mentioned features of the first aspect, the second aspect, the third aspect, and/or the fourth aspect, when applicable, apply to this fifth aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the inventive concept. The figures should not be considered limiting the inventive concept to the specific variant; instead, they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.
Figure 1 illustrates a device for training a machine learning model.
Figure 2 illustrates a microscope system.
Figure 3 is a block scheme of a method for training a machine learning model to construct a digital color image depicting a sample.
Figure 4 is a block scheme of a method for constructing a digital color image depicting a sample using a trained machine learning model.
Figure 5 illustrates an illumination system having a curved surface formed by facets.
Figure 6 illustrates a non-transitory computer-readable storage medium.
Figure 7A illustrates a digital image of a sample.
Figure 7B illustrates a high-resolution digital color image of the sample.
Figure 7C illustrates a constructed digital color image of the sample.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the invention which is defined in the appended claims.

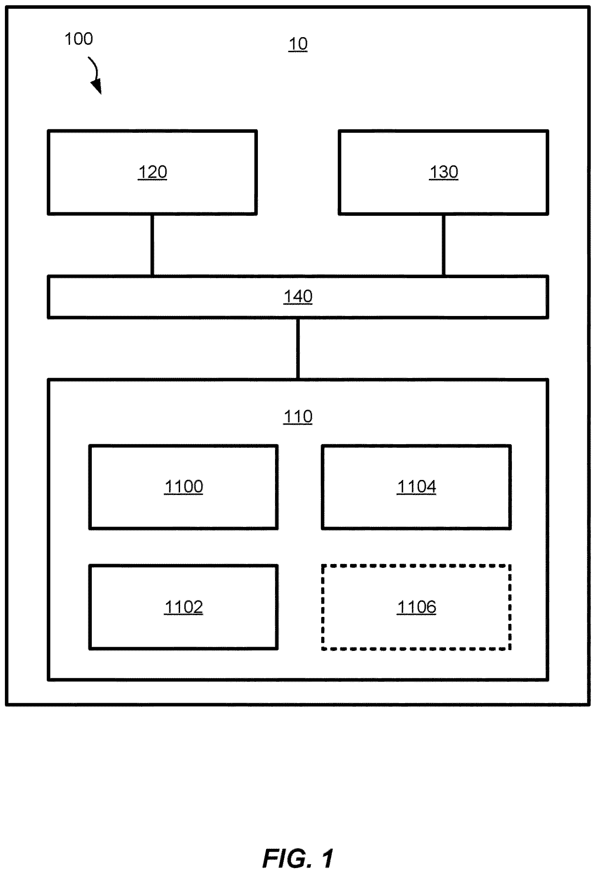

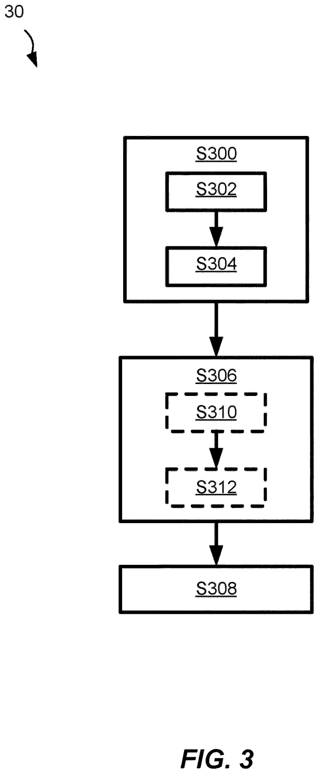

A device 10 and a method 30 for training a machine learning model to construct a digital color image depicting a sample will now be described with reference to Fig. 1 and Fig. 3.

Figure 1 illustrates, by way of example, a device 10 for training a machine learning model to construct a digital color image depicting a sample.

The device 10 is illustrated in a schematic view. Hence, it should be noted that sizes, shapes and positions of the different elements in the figure are not limiting in any way, but rather merely for illustrative purposes.

The device 10 may be a computing device. Examples of suitable computing devices comprise computers, servers, smartphones, tablets, etc. The device 10 may further be implemented as part of a cloud server and/or a distributed computing arrangement. It is further to be understood that the device 10 may comprise further components, for example input devices (mouse, keyboard, touchscreen, etc.) and/or a display. The device 10 may further comprise a power source, for example a connection to electrical power, a battery, etc. The device 10 comprises circuitry 100. As is illustrated in the example of Fig. 1, the circuitry 100 may comprise one or more of a memory 110, a processing unit 120, a transceiver 130, and a data bus 140. The memory 110, the processing unit 120, and the transceiver 130 may communicate via the data bus 140. Accompanying control lines and address busses between the memory 110, the processing unit 120 and the transceiver 130 may also be present.

The processing unit 120 may for example comprise a central processing unit (CPU), a graphical processing unit (GPU), a microcontroller, or a microprocessor. The processing unit 120 may be configured to execute program code stored in the memory 110, in order to carry out functions and operations of the device 10.

The transceiver 130 may be configured to communicate with external devices. The transceiver 130 may both transmit data from and receive data to the device 10. For example, the transceiver 130 may be configured to communicate with servers, computer external peripherals (e.g., external storage), etc. The external devices may be local devices or remote devices (e.g., a cloud server). The transceiver 130 may be configured to communicate with the external devices via an external network (e.g., a local-area network, the internet, etc.). The transceiver 130 may be configured for wireless and/or wired communication. Suitable technologies for wireless communication are known to the skilled person. Some non-limiting examples comprise Wi-Fi, Bluetooth and Near-Field Communication (NFC). Suitable technologies for wired communication are known to the skilled person. Some non-limiting examples comprise USB, Ethernet, and Firewire.

The memory 110 may be a non-transitory computer-readable storage medium. The memory 110 may be a random-access memory. The memory 110 may be a non-volatile memory. The memory 110 may comprise one or more of a buffer, a flash memory, a hard drive, a removable media, a volatile memory, a non-volatile memory, a random access memory (RAM), or another suitable device. In a typical arrangement, the memory may include a non-volatile memory for long term data storage and a volatile memory that functions as system memory for the device 10. The memory 110 may exchange data within the circuitry 100 over the data bus 140.

As is illustrated in the example of Fig. 1, the memory 110 may store program code portions 1100, 1102, 1104, 1106 corresponding to one or more functions. The program code portions 1100, 1102, 1104, 1106 may be executable by the processing unit 120, which thereby performs the functions. Hence, when it is referred to that the circuitry 100 is configured to execute a specific function, the processing unit 120 may execute program code portions corresponding to the specific function which may be stored on the memory 110. However, it is to be understood that one or more functions of the circuitry 100 may be hardware implemented and/or implemented in a specific integrated circuit. For example, one or more functions may be implemented using field-programmable gate arrays (FPGAs). Put differently, one or more functions of the circuitry 100 may be implemented in hardware or software, or as a combination of the two.

The circuitry 100 is configured to execute a first receiving function 1100, a second receiving function 1102, and a training function 1104. The circuitry 100 may be configured to execute additional functions.

The first receiving function 1100 is configured to receive a training set of digital images of the training sample. The training set of digital images is formed (has been formed) by illuminating, by a plurality of white light emitting diodes (LEDs), the training sample with a plurality of illumination patterns, and capturing, for each illumination pattern of the plurality of illumination patterns, a digital image of the training sample. Herein, a "white LED" is a light-emitting diode configured to emit white light. A white LEDs may be formed by, e.g., a blue LED covered in a layer of fluorescent material which when illuminated with blue light emits white light. The digital images of the training set of digital images may be digital color images since the training sample is illuminated by white light. However, the digital images of the training set of digital images may be more or less in color depending on the illumination pattern. For example, as will become apparent from below, the training sample may be illuminated from a direction corresponding to an angle larger than a numerical aperture of the microscope objective used to image the training sample. In such case, the digital image of the training sample may not resemble the training sample, while still comprising information regarding the training sample. For instance, such digital image may comprise information regarding higher spatial frequencies of the training sample than what the microscope objective can collect using conventional microscope illumination (e.g., bright-field illumination).

The first receiving function 1100 may be configured to receive the training set of digital images via the transceiver 130. For example, the training set of digital images may be captured using an external microscope system and then transmitted to the transceiver 130 of the device 10. As a further example, the device 10 may form part of a microscope system and the training set of digital images may be received from an image sensor of the microscope system. The circuitry 100 may be configured to execute an instructing function 1106 configured to transmit instructions, via the transceiver 130, to the microscope system on how to capture the training set of images. The memory 110 may be configured to store the training set of digital images, and the first receiving function 1100 may be configured to receive the training set of digital images from the memory 110.

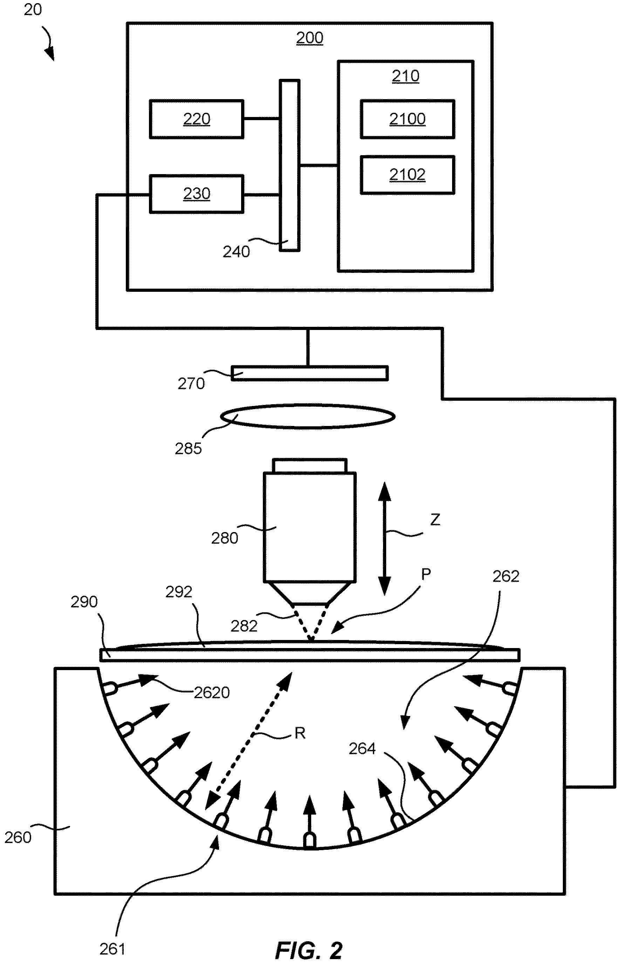

The training set of digital images may be acquired (or captured) using a first microscope objective and an image sensor. For example, the training set of digital images may be acquired using the microscope system 20 as will be further described below in connection with Fig. 2. The training sample may be sequentially illuminated, by the white LEDs, with each illumination pattern of the plurality of illumination patterns. Each digital image of the training set of digital images may be captured when the training sample is illuminated with an illumination pattern of the plurality of illumination patterns.

Each white LED of the plurality of white LEDs may be configured to illuminate the training sample from one direction of a plurality of directions. In other words, each white LED may illuminate the training sample from a different (or unique) direction. The different illumination patterns of the plurality of illumination patterns may be formed by illuminating the training sample with at least one white LED of the plurality of white LEDs. In other words, each illumination pattern of the plurality of illumination patterns may be formed by illuminating the training sample from at least one direction of the plurality of directions. Thus, the training sample may be illuminated by a single white LED of the plurality of white LEDs (or from a single direction of the plurality of direction. Alternatively, the training sample may be illuminated by several white LEDs of the plurality of white LEDs (or from several directions of the plurality of directions) at the same time.

At least one direction of the plurality of directions may correspond to an angle larger than a numerical aperture of the first microscope objective used to capture the digital images of the training set of digital images. Since the training sample may be illuminated from a plurality of different directions and a digital image may be captured for each of the plurality of directions, information regarding finer details of the training sample may be captured than what normally may be resolvable by the microscope objective used to image the training sample. This can be understood as different portions of Fourier space (i.e., the spatial frequency domain) associated with the training sample are imaged for different illumination directions. This technique may be known in the art as Fourier ptychography. Generally in Fourier ptychography, high spatial frequencies in Fourier space associated with a sample are sampled when that sample is illuminated from a direction corresponding to a large angle of incidence. Hence, in case the sample is illuminated from a direction corresponding to an angle larger than the numerical aperture of the first microscope objective, even higher spatial frequencies of the Fourier space may be sampled. This is possible since the light is scattered by the sample, and a portion of the light scattered by the sample may be collected by the first microscope objective. This illumination technique may further allow information regarding a refractive index (or a spatial distribution of the refractive index) associated with the sample to be captured by the microscope objective used to image the training sample (e.g., the first microscope objective). This can be understood as an effect of refraction of light being dependent on an angle of incident for light illuminating the training sample and the refractive index of the training sample. Information regarding the refractive index of the training sample may, in turn, allow phase information (typically referred to as quantitative phase within the art) associated with the training sample to be determined. Since the plurality of digital images comprises information associated with one or more of fine details of the training sample, a refractive index associated with the training sample, and phase information associated with the training sample, this information may be used in the training of the machine learning model, which may, in turn, allow for a machine learning model being trained to more accurately construct the digital color image depicting the sample than what would be allowed in case the plurality of digital images were captured from only one direction. Put differently, it may allow for a machine learning model being trained to construct the digital color image depicting the sample more accurately than what would be allowed in case the plurality of digital images was captured from only one direction or using a conventional microscope (e.g., using bright-field illumination). It is to be understood that the information relating to one or more of finer details of the training sample, refractive index associated with the training sample, and phase information associated with the training sample may be captured by illuminating the training sample from more than one direction of the plurality of different directions at a time, for example from a subset of the plurality of directions. The subset of the plurality of directions may comprise directions corresponding to different portions of the Fourier space of the training sample. The different portions of the Fourier space of the training sample may be partially overlapping or non-overlapping. Thus, a microscope objective having a relatively lower magnification may be used while still being able to capture information related to fine details (i.e., finer than what the microscope objective normally allows using conventional microscopy illumination) of the training sample. For example, by illuminating the training sample from the plurality of directions, a microscope objective having a numerical aperture of 0.4 may capture information relating to fine details to the same extent that a microscope objective being used in conventional microscopy (e.g., using bright-field illumination) and having a numerical aperture of 1.25. Put differently, by illuminating the training sample from the plurality of directions, a microscope objective having a magnification of 20 times may capture information relating to fine details to the same extent that a microscope objective being used in conventional microscopy (e.g., using bright-field illumination) and having a magnification of 100 times. It is to be understood that the above magnifications and numerical apertures are examples only, and the present invention may be implemented for other magnifications and/or numerical apertures as well. A suitable microscope system comprising a microscope objective and an image sensor will be described in connection with Fig. 2.

The second receiving function 1102 is configured to receive a ground truth comprising a high-resolution digital color image of the training sample. A resolution of the high-resolution digital color image (i.e. the ground truth) may be relatively higher than a resolution of at least one digital image of the training set of digital images. A numerical aperture of a microscope objective used to capture the high-resolution digital color image of the training sample may be higher than a numerical aperture of a microscope objective used to capture the training set of digital images. For instance, as a non-limiting example, the high-resolution digital color image may be captured using a microscope objective having a numerical aperture of 1.25 (or a magnification of 100 times). A resolution of the high-resolution digital color image (i.e. the ground truth) may be relatively higher than a resolution of each digital image of the training set of digital images. The ground truth may be information that is known to be real and/or true. In this context, since the machine learning model is trained to construct a digital color image depicting a sample, the ground truth may represent a "correct" representation of the sample. For example, the ground truth may comprise a digital color image of the training sample captured by means of a different imaging technique. The ground truth may be received via the transceiver 130. For example, the ground truth may be formed on a different device and/or stored on a different device and transmitted to the device 10 via the transceiver 130. The second receiving function 1102 may be further configured to illuminate, using an illumination system (e.g., a conventional light source or the illumination system 260 illustrated in Fig. 2), the training sample with a bright-field illumination pattern; and to capture, using a microscope objective and an image sensor (e.g., the image sensor 270 illustrated in Fig. 2), the high-resolution digital color image of the training sample while the training sample is illuminated with the bright-field illumination pattern. Put differently, the second receiving function 1102 may be further configured to control an illumination system (e.g., a conventional light source or the illumination system 260 illustrated in Fig. 2) to illuminate the training sample with a bright-field illumination pattern; and to control an image sensor (e.g., the image sensor 270 illustrated in Fig. 2) to capture, using a microscope objective, the high-resolution digital color image of the training sample.

The instructing function 1106 may be further configured to transmit instructions, via the transceiver 130, to the microscope system on how to acquire high-resolution digital image of the ground truth. The ground truth may be acquired by illuminating the training sample with a bright-field illumination pattern; and capturing, using a second microscope objective, the high-resolution digital color image of the training sample while the training sample is illuminated. A numerical aperture of the second microscope objective (i.e. the microscope objective used to acquire the ground truth) may be higher than a numerical aperture of the first microscope objective (i.e. the microscope objective used to acquire the training set of digital images). Hence, a resolution of the ground truth may be relatively higher than a resolution of at least one digital image of the training set of digital images. Since the second microscope objective used to capture the high-resolution digital color image of the training sample may have a relatively higher numerical aperture (and thus a larger magnification) than the first microscope objective, the high-resolution digital color image may depict a smaller area of the training sample compared to an image captured using the first microscope objective used to capture the training set of digital images. For this reason, the high-resolution digital color image of the training sample may be formed from a plurality of individual high-resolution digital color images of the training sample. For example, by combining (e.g., by stitching) the plurality of individual high-resolution digital color images. The high-resolution digital color image of the training sample may thereby depict an area of the training sample comparable to an area of the training sample imaged by the first microscope objective used to capture the training set of digital images. Alternatively, each digital image of the training set may be cropped such that an area of the training sample depicted in each cropped digital image of the training set may be similar and/or comparable to an area of the training sample depicted in the high-resolution digital color image of the training sample.

The bright-field illumination pattern may be formed by illuminating the training sample simultaneously from a subset of the plurality of illumination patterns used to illuminate the training sample during acquisition of the training set of digital images. Put differently, the bright-field illumination pattern may be formed by illuminating the training sample from a subset of the plurality of directions achieved by the plurality of white LEDs, i.e. illuminated from one or more directions of the plurality of directions. Which directions, and the number of directions, of the subset may be chosen such that illumination of the training sample is similar to conventional microscopy illumination (e.g., brightfield illumination). The subset of directions may, e.g., be a majority of, or all, directions of the plurality of directions. The high-resolution digital color image of the training sample may be captured while the training sample is illuminated simultaneously from the subset of the plurality of directions. Hence, the high-resolution digital color image of the training sample may be similar to a high-resolution digital color image captured by a conventional microscope system using, for instance, bright-field microscopy. The training set of digital images may be acquired prior to the high-resolution digital color image of the ground truth.

The training function 1104 is configured to train the machine learning model to construct the digital color image depicting a sample using the training set of digital images and the ground truth. For instance, the training function 1104 (or the training device 10) may be configured to train the machine learning model according to the method 30 described in connection with Fig. 3 below. The machine learning model may be a convolutional neural network. The machine learning model may be a convolutional neural network suitable for digital image construction.

The training function 1104 may be configured to train the machine learning model iteratively and/or recursively until a difference between an output of the machine learning model (i.e., the digital color image depicting the training sample) and the ground truth (e.g., the high-resolution digital color image depicting the training sample) is smaller than a predetermined threshold. Hence, the training function 1104 may train the machine learning model to correlate the training set of digital images of the training sample to the ground truth (e.g., the high-resolution digital image depicting the training sample). A smaller difference between the output of the machine learning model and the ground truth may indicate a higher accuracy of the digital color image depicting the sample provided by the machine learning model. Hence, preferably, the difference between the output of the machine learning model and the ground truth may be minimized. A skilled person realizes that minimizing functions (e.g., the loss function) may be associated with tolerances. For example, the loss function may be regarded as being minimized even though the minimized loss function has a value which is not a local and/or global minimum.

The machine learning model may be trained using a plurality of training sets and a plurality of corresponding ground truths. Put differently, the machine learning model may be trained using a plurality of different training samples. This may allow for an improved training of the machine learning model to construct the digital color image depicting the sample. The machine learning model may be trained to construct digital color images of samples for a plurality of different sample types. In such case, the machine learning model may, for each sample type, be trained using a training set of digital images of a training sample of the sample type, and a corresponding ground truth associated with a training sample of the respective sample type (e.g., a high-resolution digital image of a training sample of the sample type). This may allow the trained machine learning model to construct digital color images depicting samples of different sample types. The trained machine learning model may construct digital color images of samples that were not used during training.

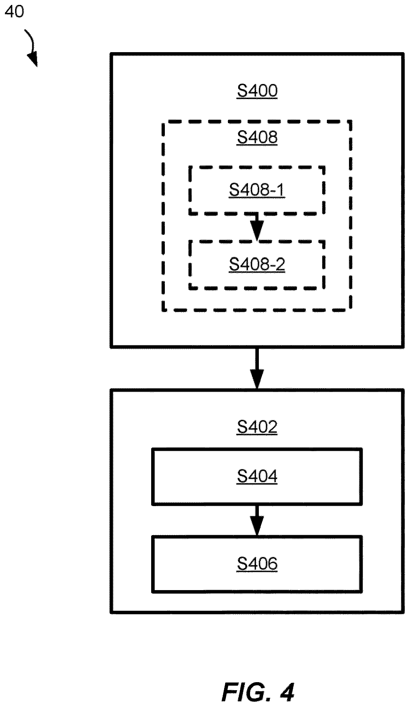

A microscope system 20 and a method 40 for constructing a digital color image depicting a sample will now be described with reference to Fig. 2 and Fig. 4.

Figure 2 illustrates a microscope system 20. The microscope system 20 of Fig. 2 may be suitable for acquiring training sets of digital images of training samples to be used when training a machine learning model to construct a digital color image depicting a sample as described above in connection with the device 10 of Fig. 1 or in connection with the method as described below in connection with Fig. 3. Further, the microscope system 20 of Fig. 2 may be suitable to acquire a high-resolution digital color image of the sample (i.e. the ground truth) used to train the machine learning model. Further, the microscope system 20 of Fig. 2 may be suitable for acquiring an input set of digital images of a sample, to be used by the machine learning model to construct a digital color image of the sample (as will be further described below in connection with Fig. 2 and Fig. 4).

The microscope system 20 comprises an illumination system 260, an image sensor 270, a microscope objective 280, and circuitry 200. The microscope system 20 may further comprise a sample holder 290 as illustrated in the example of Fig. 2. The microscope system 20 may comprise further components, for example input devices (mouse, keyboard, touchscreen, etc.) and/or a display.

The circuitry 200 may comprise one or more of a memory 210, a processing unit 220, a transceiver 230, and a data bus 240. The processing unit 220 may comprise a central processing unit (CPU) and/or a graphical processing unit (GPU). The transceiver 230 may be configured to communicate with external devices. For example, the transceiver 230 may be configured to communicate with servers, computer external peripherals (e.g., external storage), etc. The external devices may be local devices or remote devices (e.g., a cloud server). The transceiver 230 may be configured to communicate with the external devices via an external network (e.g., a local-area network, the internet, etc.) The transceiver 230 may be configured for wireless and/or wired communication. Suitable technologies for wireless communication are known to the skilled person. Some non-limiting examples comprise Wi-Fi, Bluetooth and Near-Field Communication (NFC). Suitable technologies for wired communication are known to the skilled person. Some non-limiting examples comprise USB, Ethernet, and Firewire. The memory 210, the processing unit 220, and the transceiver 230 may communicate via the data bus 240. The illumination system 260 and/or the image sensor 270 may be configured to communicate with the circuitry 200 via the transceiver 230 as illustrated in Fig. 2. Additionally, or alternatively, the illumination system 260 and/or the image sensor 270 may be configured to directly (e.g., via a wired connection) communicate with the data bus 240. The memory 210 may be a non-transitory computer-readable storage medium. The memory 210 may be a random-access memory. The memory 210 may be a non-volatile memory. The memory 210 may comprise one or more of a buffer, a flash memory, a hard drive, a removable media, a volatile memory, a non-volatile memory, a random access memory (RAM), or another suitable device. In a typical arrangement, the memory may include a non-volatile memory for long term data storage and a volatile memory that functions as system memory for the microscope system 20. The memory 210 may exchange data within the circuitry 200 over the data bus 240. As is illustrated in the example of Fig. 2, the memory 210 may store program code portions 2100, 2102 corresponding to one or more functions. The program code portions 2100, 2102 may be executable by the processing unit 220, which thereby performs the functions. Hence, when it is referred to that the circuitry 200 is configured to execute a specific function, the processing unit 220 may execute program code portions corresponding to the specific function which may be stored on the memory 210. However, it is to be understood that one or more functions of the circuitry 200 may be hardware implemented and/or implemented in a specific integrated circuit. For example, one or more functions may be implemented using field-programmable gate arrays (FPGAs). Put differently, one or more functions of the circuitry 200 may be implemented in hardware or software, or as a combination of the two.

Even though the image sensor 270 is illustrated on its own in Fig. 2, it is to be understood that the image sensor 270 may be comprised in a camera. In the example of Fig. 2, the sample holder 290 is a microscope slide onto which a sample 292 has been applied. It is to be understood that the sample 292 may be covered by a coverslip (not illustrated in Fig. 2). The sample holder 290 may be configured to hold the sample 292 to be analyzed. The sample holder 290 may be movable (e.g., by being coupled to manual and/or motorized stages), thereby allowing the sample 292 to be moved such that different portions of the sample 292 may be imaged by the microscope objective 280.

The illumination system 260 is configured to illuminate the sample 292 with a plurality of illumination patterns. As is illustrated in Fig. 2, the illumination system 260 may comprise a plurality of white light emitting diodes (LEDs) 261. The white LEDs may be any type of LED, such as ordinary LED bulbs (e.g. traditional and inorganic LEDs), graphene LEDs, or LEDs typically found in displays (e.g. quantum dot LEDs (QLEDs) or organic LEDs (OLEDs)). However, other types of sources of white light may be used as well. The illumination system 260 may, for example, comprise a plurality of lasers, and the light emitted from each laser of the plurality of lasers may be converted to light with broader spectral bandwidth. An example of such conversion process may be referred to as supercontinuum generation. The light sources may emit incoherent light, quasi-coherent light, or coherent light.

The illumination patterns of the plurality of illumination patterns may be formed by illuminating the sample 292 by one or more white LEDs of the plurality of white LEDs 261. In other words, an illumination pattern of the plurality of illumination patterns may be formed by illuminating the sample 292 with just one white LED of the plurality of white LEDs 261. Alternatively, or in combination, an illumination pattern of the plurality of illumination patterns may be formed by illuminating the sample 292 simultaneous by a subset of the plurality of white LEDs 261.

Each white LED (or other type of light source) of the plurality of white LEDs may be arranged to illuminate the sample 292 from one direction of a plurality of directions 262. The illumination system 260 may be configured to simultaneously illuminate the sample 292 with one or more white LEDs of the plurality of white LEDs 261. Put differently, the illumination system 260 may be configured to simultaneously illuminate the sample 292 from one or more directions of the plurality of directions 262. At least one direction of the plurality of directions may correspond to an angle larger than a numerical aperture of the microscope objective 280.

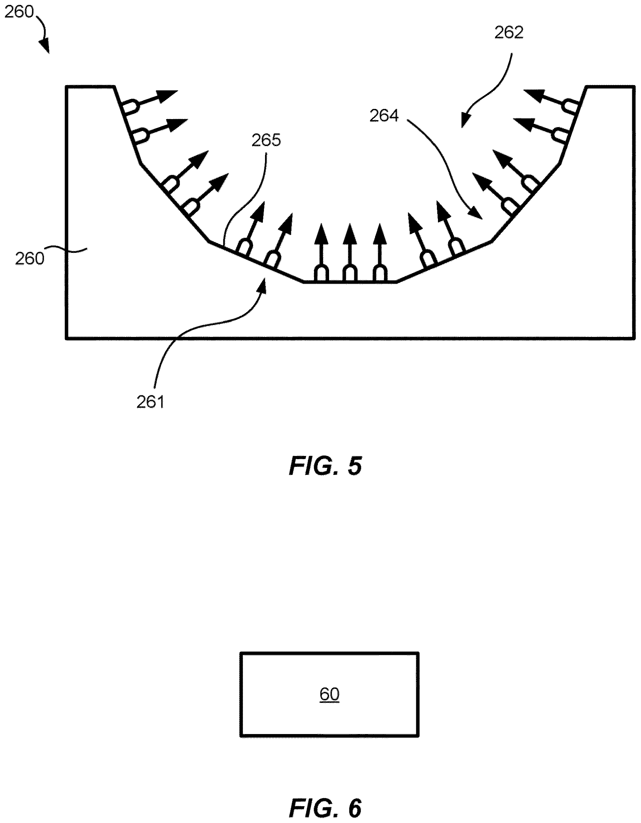

As is further illustrated in Fig. 2, the plurality of white LEDs 261 may be arranged on a curved surface 264. As illustrated in the example of Fig. 2, the curved surface 264 may be concave along at least one direction along the surface 264. For example, the curved surface 264 may be a cylindrical surface. The curved surface 264 may be concave along two perpendicular directions along the surface. For example, the curved surface 264 may have a shape similar to a segment of a sphere. A segment of a sphere may be a spherical cap or a spherical dome. Arranging the plurality of white LEDs 261 on a curved surface 264 may be advantageous in that a distance R from each white LED to a current imaging position P of the microscope system 20 may be similar. Since this distance is similar, an intensity of light emitted from each white LED may be similar at the current imaging position P. This may be understood as an effect of the inverse square law. Thus, the sample 292 may be illuminated by light having similar intensities for each direction in the plurality of directions 262, which may, in turn, allow for a more homogenous illumination of the sample 292 independent of illumination direction. The distance R from each light source to the current imaging position P may be in a range from 4 cm to 15 cm. It may be advantageous to configure the illumination system 260 such that the distance R from each white LED to the current imaging position P is large enough such that each white LED may be treated as a point source. Hence, the distance R from each white LED to the current imaging position P may be larger than 15 cm, given that an intensity of light from each white LED at the current imaging position is high enough to produce the sets of digital images. However, it is to be understood that the plurality of white LEDs 261 may be arranged on a flat surface or on a surface having an irregular shape. It is further to be understood that Fig. 2 illustrates a cross section of the microscope system 20, and in particular the illumination system 260. Hence, the curved surface 264 of the illumination system 260 illustrated in Fig. 2 may be a cylindrical surface or a portion of a spherical surface (or of a quasi-spherical surface). The curved surface 264 of the illumination system 260 may be bowl shaped. The curved surface 264 may be formed of facets 265, which is illustrated in the example of Fig. 5. Put differently, the curved surface 264 may be formed of a plurality of flat surfaces. Thus, the curved surface 264 may be piecewise flat. The curved surface 264 may be a portion of a quasi-spherical surface comprising a plurality of facets or segments. Hence, the curved surface 264 may be a portion of a surface of a polyhedron. An example of such polyhedron may be a truncated icosahedron. The plurality of white LEDs 261 may be arranged on the facets 265. Each white LED may be arranged such that the white LED is configured to emit light in a direction substantially parallel to a normal of the associated facet. It is to be understood, similar to the example illustrated in Fig. 2, that Fig. 5 illustrates a cross section of the illumination system 260. Hence, the curved surface 264 of the illumination system 260 illustrated in Fig. 5 may be a quasi-cylindrical surface or a portion of a quasi-spherical surface. The curved surface 264 of the illumination system 260 of Fig. 5 may have a shape similar to a bowl. Hence, the facets 265 of Fig. 5 are illustrated with lines, and it is to be understood that each facet 265 may be a flat surface having at least three sides. For instance, the curved surface 264 may be formed of facets having five sides and facets having six sides (e.g., similar to an inner surface of a football or soccer ball). Even though that the curved surface 264 in Fig. 5 is illustrated as a continuous surface, it is to be understood that each facet may be separate. Hence, the curved surface may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets. It is further to be understood that the number facets 265 of the illumination system 260 of Fig. 5 is an example only, and other numbers of facets 265 may be used to form the curved surface 264 of the illumination system 260. It is furthermore to be understood that the number of white LEDs on each facet 265 is an example only, and that number may vary.

As is illustrated in Fig. 2, the microscope objective 280 is arranged to image the sample 292 onto the image sensor 270. The microscope system 20 may comprise a plurality of microscope objectives. Hence, the microscope system 20 may comprise at least one microscope objective 280. This may allow the microscope system 20 to image the sample with different microscope objectives. For example, the microscope system 20 may comprise a first microscope objective. A numerical aperture of the first microscope objective may be 0.4 or lower. Put differently, the first microscope objective may have a magnification of 20 times or lower. Hence, a larger portion of the sample 292 may be imaged at a time compared to a microscope objective having a relatively higher numerical aperture. This may, in turn, allow for a number of individual imaging positions needed to image a majority of the sample 292 to be reduced. Thus, a time needed to image a majority of the sample 292 may thereby be reduced. This may, in particular, be advantageous in case the machine learning model is trained to construct a digital color image having a relatively higher resolution than the digital images input to the machine learning model (i.e., the digital images of the input set). Hence, the sample 292 may be imaged more quickly, while the constructed digital color image depicting the sample may have a resolution relatively higher than what the first microscope objective normally allows. The first microscope objective may be used when capturing the digital images of the sample 292. The digital images captured using the first microscope objective may be used when training the machine learning model (i.e., the training set of digital images of the sample) and/or when acquiring the input set of digital images of the sample to be input into the machine learning model trained to construct the digital color image depicting the sample.

The microscope system 20 may further comprise a second microscope objective having a magnification of, e.g., 100 times and/or a numerical aperture of 1.25. The second microscope objective may be used to acquire a high-resolution digital color image having a relatively higher resolution than a digital image acquired using the first microscope objective. Hence, the second microscope objective may be used to acquire high-resolution digital color images (i.e., the ground truth) for use when training the machine learning model. Put differently, high-resolution digital color images captured using the second microscope objective may be used to form the ground truth used when training the machine learning model. As described above in connection with Fig. 1, the ground truth may be acquired by capturing an image of the sample when illuminated with a bright-field illumination pattern. The bright-field illumination pattern may be formed by simultaneously illuminating the sample by a subset of the plurality of white LEDs. The bright-field illumination pattern may be formed by simultaneously illuminating the sample by a majority (or all) of the plurality of white LEDs.

The numerical aperture and magnification of the first microscope objective and/or the second microscope objective are examples only and may be chosen depending on, e.g., a type of the sample 292. For example, the numerical aperture of the first microscope objective may have a magnification of 10 times and/or a numerical aperture of 0.25. Preferably, the numerical aperture of the second microscope objective may be 2 to 3 times higher than the numerical aperture of the first microscope objective. This may be advantageous in that the machine learning model may construct digital color images of the sample corresponding to an image of the sample taken with a numerical aperture of 2 to 3 times what the input images are taken with. It is to be understood that the microscope system 20 may comprise further optics which may be used together with the at least one microscope objective 280 to image the sample 292 onto the image sensor 270. For example, the microscope system may, as illustrated in the example of Fig. 2, comprise at least one relay lens 285 arranged such that the sample 292 may be imaged onto the image sensor 270 by the at least one microscope objective 280 and the at least one relay lens 285. It is further to be understood that the at least one relay lens 285 may be chosen (e.g., focal length, material, size, etc.) depending on the magnification and/or the numerical aperture of the at least one microscope objective 280. Hence, each microscope objective 280 may have a corresponding relay lens of the at least one relay lens. The at least one microscope objective 280 may be movable in a longitudinal direction Z by being coupled to a manual and/or motorized stage. The longitudinal direction Z may be parallel to an optical axis of the microscope system 20. Put differently, the at least one microscope objective 280 may be movable in a focusing direction of the microscope system 20. Alternatively, or additionally, the sample holder 290 may be movable along the longitudinal direction Z. The at least one microscope objective 280 and/or the sample holder 290 may be movable in a direction such that the sample 292 may be moved such that a focused image may be captured by the image sensor 270 (assuming that the illumination system 260 is configured for brightfield illumination). The longitudinal direction Z of the at least one microscope objective 280 may be controlled by the circuitry 200. For example, the circuitry 200 may be configured to execute a focus function (not illustrated in Fig. 2) configured to adjust a position of the at least one microscope objective 280 along the longitudinal direction Z. The focus function may be configured to automatically adjust the position of the at least one microscope objective 280 along the longitudinal direction Z. Put differently, the focus function may be an autofocus function.

The circuitry 200 is configured to execute an acquisition function 2100 and an image construction function 2102.

The acquisition function 2100 is configured to acquire an input set of digital images by being configured to control the plurality of white light emitting diodes 261 of the illumination system 260 to illuminate the sample 292 with each illumination pattern of the plurality of illumination patterns 262. It goes without saying that the process of acquiring the input set of digital images may be the same as the process of acquiring the training set of digital images as described above. Thus, the same features and advantages mentioned in regard to the acquisition of the training set of digital images may apply also to the acquisition of the input set of digital images.

The acquisition function 2100 is further configured to control the image sensor 270 to capture a digital image of the sample 292 for each illumination pattern of the plurality of illumination patterns 262. Each image may be captured using the at least one microscope objective 280. The input set of digital images is acquired by illuminating the sample 292 with a plurality of illumination patterns and capturing a digital image for each of the plurality of illumination patterns. As discussed previously, each white LED may be configured to illuminate the sample from one direction of a plurality of directions. At least one direction of the plurality of directions may correspond to an angle larger than a numerical aperture 282 of the microscope objective 280. For example, direction 2620 in Fig. 2 may correspond to an angle larger than the numerical aperture 282 of the at least one microscope objective 280. Light entering the at least one microscope objective 280 from the direction 2620 without being scattered may not be allowed to propagate through the microscope objective 280 (i.e., the angle of incidence of light from this direction may be outside the numerical aperture 282 of the microscope objective 280) to the image sensor 270. Thus, light from this direction may need to be scattered by the sample 292 to be allowed to propagate through the microscope objective 280 to the image sensor 270.

The image construction function 2102 is configured to input the input set of digital images into a machine learning model being trained as described in connection with Fig. 1 and Fig. 3. The image construction function 2102 is further configured to receive, from the machine learning model, an output comprising a constructed digital color image depicting the sample. Put differently, the image construction function 2102 may be configured to construct the digital color image depicting the sample by inputting the input set of digital images into the trained machine learning model (e.g., trained in the manner described in connection with Fig. 1 and Fig. 3), and receiving, from the trained machine learning model, an output comprising the digital color image depicting the sample. Hence, the process of imaging the sample 292 may be more efficient, since a relatively high-resolution digital color image depicting the sample is output from the trained machine learning model using relatively low-resolution digital images of the sample 292. Further, this allows a relatively high-resolution color image of the sample 292 to be constructed using white LEDs. This may, in turn, allow for a more rapid and/or more cost-effective imaging of the sample 292 since there is no need to capture different sequences of images of the sample 292 using different colored light sources.

It is to be understood that, even though the construction of the digital color image depicting a sample is described in connection with the microscope system of Fig. 2, the construction of the digital color image may be implemented in a computing device. Hence, the computing device may be configured to receive the input set of digital images, and to input the received input set of digital images into a machine learning model trained according to the above. The input set of digital images may, e.g., be captured using the microscope system of Fig. 2, and sent to the computing device (i.e., the computing device may be configured to receive the input set of digital images from the microscope system).

Figure 3 is a block scheme of a method 30 for training a machine learning model to construct a digital color image 704 depicting a sample. The method 30 may be a computer implemented method. Below, the different steps are described in more detail. Even though illustrated in a specific order, one or more steps of the method 30 may be performed in any suitable order, in parallel, partially in parallel, as well as multiple times.

A training set of digital images of a training sample is acquired S300. The training set of digital images of the training sample is acquired S300 by: illuminating S302, by a plurality of white light emitting diodes, the training sample with a plurality of illumination patterns, and capturing S304, for each illumination pattern of the plurality of illumination patterns, a digital image of the training sample.

A ground truth comprising a high-resolution digital color image of the training sample is received S306. A resolution of the high-resolution digital color image may be relatively higher than a resolution of at least one digital image of the training set of digital images.

The machine learning model is trained S308 to construct the digital color image depicting a sample using the training set of digital images and the ground truth.

At least one digital image of the training set of digital images may be captured using a first microscope objective. The act of receiving S306 the ground truth may comprise: illuminating S310 the training sample with a bright-field illumination pattern; and capturing S312, using a second microscope objective, the high-resolution digital color image of the training sample while the training sample is illuminated. A numerical aperture of the second microscope objective may be higher than a numerical aperture of the first microscope objective.

Each white light emitting diode of the plurality of white light emitting diodes may be configured to illuminate the training sample from one direction of a plurality of directions.

At least one digital image of the training set of digital images may be captured S304 using a first microscope objective. At least one direction of the plurality of directions may correspond to an angle larger than a numerical aperture of the first microscope objective.

Figure 4 is a block scheme of a method 40 for constructing a digital color image depicting a sample. The method 40 may be a computer implemented method. Below, the different steps are described in more detail. Even though illustrated in a specific order, one or more steps of the method 40 may be performed in any suitable order, in parallel, partially in parallel, as well as multiple times.

An input set of digital images of the sample is received S400. The input set of digital images may be acquired by illuminating, by a plurality of white light emitting diodes, the sample with a plurality of illumination patterns and capturing, for each illumination pattern of the plurality of illumination patterns, a digital image of the sample.

A digital color image depicting the sample is constructed S402. The digital color image depicting the sample is constructed S402 by: inputting S404 the input set of digital images into a machine learning model being trained according to the method 30 as described above in connection with Fig. 3, and receiving S406, from the machine learning model, an output comprising the constructed digital color image depicting a sample. A resolution of the constructed digital color image may be relatively higher than a resolution of at least one digital image of the input set of digital images.

The act of receiving S400 the input set of digital images of the sample may comprise: acquiring S408 the input set of digital images of the sample by: illuminating S408-1, by a plurality of white light emitting diodes, the sample with a plurality of illumination patterns, and capturing S408-2, for each illumination pattern of the plurality of illumination patterns, a digital image of the sample.

Each white light emitting diode of the plurality of white light emitting diodes may be configured to illuminate the sample from one direction of a plurality of directions.

At least one digital image of the input set of digital images may be captured S408-2 using a microscope objective, and wherein at least one direction of the plurality of directions may correspond to an angle larger than a numerical aperture of the microscope objective.

Figure 6 illustrates a non-transitory computer-readable storage medium 60. The non-transitory computer-readable storage medium 60 comprises program code portions which, when executed on a device having processing capabilities, performs the method 40 as described in connection with Fig. 4.

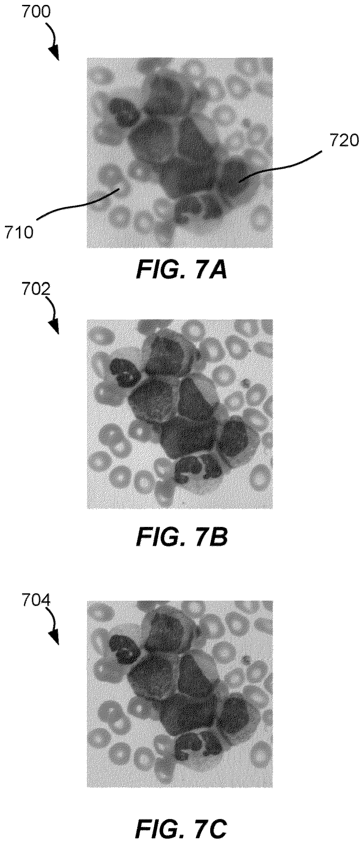

Figure 7A to 7C illustrates different digital images of a sample. In this example, the sample comprises red blood cells 710 and white blood cells 720.

Fig. 7A illustrates a digital image 700 of the sample captured using a microscope objective having a magnification of 20 times. As is seen in Fig. 7A, the digital image 700 is captured in color, but has a relatively low resolution. The resolution of the digital image 700 of the sample as illustrated herein may represent resolutions of digital images of the training set of digital images used to train the machine learning model. The resolution of the digital image 700 of the sample as illustrated herein may also represent resolutions of digital images of the input set of digital images input to the trained machine learning model to construct a digital color image of the sample. Thus, the digital image 700 may be a digital image of the sample captured using the first microscope objective (i.e., the microscope objective used when capturing the training set of digital images and/or the input set of digital image) when illuminated with a bright-field illumination pattern.

Fig. 7B illustrates a high-resolution digital color image 702 of the sample. As compared to the digital image 700 of Fig. 7A, the high-resolution digital color image 702 has a relatively higher resolution which facilitates an improved analysis of the depicted sample. The high-resolution digital color image 702 is captured using conventional microscopy (in this case bright-field microscopy using a microscope objective having a magnification of 100 times). The high-resolution digital color image 702 may represent the ground truth used to train the machine learning model as described herein. In other words, the machine learning model may try to replicate the high-resolution digital color image 702 of Fig. 7B using digital images captured using the first microscope objective.

Fig. 7C illustrates a digital color image 704 of the sample, constructed by the machine learning model from digital images having a resolution similar (or identical) to the digital color image 700 of Fig. 7A. In other words, the digital color image 704 is an example of an output from the machine learning model trained to construct a digital color image depicting the sample. Comparing the high-resolution digital color image 702 of Fig. 7B with the constructed digital color image 704 of Fig. 7C, it is clear that the two images is very similar, if not identical. Hence, the machine learning model may construct the digital color image 704 of Fig. 7C, having a similar resolution to the digital color image 702 of Fig. 7B, while using digital images having similar resolution to the digital color image 700 of Fig. 7A.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as SwinIR. The machine learning model may be a convolutional neural network. The machine learning model may be trained to predict a desired output using example input training data and a ground truth, i.e. the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). Different types of loss functions may be used to evaluate the predicted output, i.e. how well is compares to the ground truth. The machine learning model may be trained to reduce (or increase, depending on the loss function) a value of the loss function. Put differently, training the machine learning model may be seen as minimizing (or maximizing) the loss function. The loss function may be a pixel-wise loss function, i.e. a loss function which compares the output and ground truth pixel by pixel. Alternatively, the loss function may be a non-pixel-wise loss function, i.e. a loss function which looks at the images as a whole.

The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value of the corresponding pixel in the digital image. Hence, the input and output to the machine learning model may be numerical (e.g., a matrix or an array) representing digital images. In this context, the input is a set of digital images (i.e., the training set or the input set). Thus, the input to the machine learning model may be a plurality of matrices, or a three-dimensional matrix. It is to be understood that the machine learning model may take further input during training. An example of such input may be what type of sample is to be imaged. Such input may then be used when constructing a digital image depicting the sample using the trained machine learning model. Further, in this context, the output is a digital image. Thus, the output of the machine learning model may be a matrix representing the constructed digital color image depicting a sample.

The person skilled in the art realizes that the present inventive concept by no means is limited to the preferred variants described above. On the contrary, many modifications and variations are possible within the scope of the appended claims.

Additionally, variations to the disclosed variants can be understood and effected by the skilled person in practicing the claimed invention, from a study of the drawings, the disclosure, and the appended claims.

## Claims

1. A method (30) for training a machine learning model to construct a high-resolution digital color image depicting a sample, the method comprising
acquiring (S300) a training set of digital color images of a training sample by:
illuminating (S302), by a plurality of white light emitting diodes, the training sample with a plurality of illumination patterns, and
capturing (S304), for each illumination pattern of the plurality of illumination patterns, a digital color image of the training sample;
receiving (S306) a ground truth comprising a high-resolution digital color image of the training sample, wherein a resolution of the high-resolution digital color image is relatively higher than a resolution of at least one digital color image of the training set of digital color images; and
training (S308) the machine learning model to construct the high-resolution digital color image depicting a sample using the training set of digital color images and the ground truth.

2. The method (30) according to claim 1, wherein at least one digital color image of the training set of digital color images is captured using a first microscope objective, and wherein the act of receiving (S306) the ground truth comprises:
illuminating (S310) the training sample with a bright-field illumination pattern; and
capturing (S312), using a second microscope objective, the high-resolution digital color image of the training sample while the training sample is illuminated with the bright-field illumination pattern,
wherein a numerical aperture of the second microscope objective is higher than a numerical aperture of the first microscope objective.

3. The method (30) according to claim 1 or 2, wherein each white light emitting diode of the plurality of white light emitting diodes is configured to illuminate the training sample from one direction of a plurality of directions.

4. The method (30) according to claim 3, wherein at least one digital color image of the training set of digital color images is captured (S304) using a first microscope objective, and wherein at least one direction of the plurality of directions corresponds to an angle larger than a numerical aperture of the first microscope objective.

5. A method (40) for constructing a high-resolution digital color image depicting a sample, the method (40) comprising:
receiving (S400) an input set of digital color images of the sample, wherein the input set of digital color images is acquired by illuminating, by a plurality of white light emitting diodes, the sample with a plurality of illumination patterns and capturing, for each illumination pattern of the plurality of illumination patterns, a digital color image of the sample;
constructing (S402) a high-resolution digital color image depicting the sample by
inputting (S404) the input set of digital color images into a machine learning model being trained according to the method of any one of claims 1-4, and
receiving (S406), from the machine learning model, an output comprising the constructed high-resolution digital color image depicting a sample
wherein a resolution of the constructed digital color image is relatively higher than a resolution of at least one digital color image of the input set of digital color images.

6. The method (40) according to claim 5, wherein each white light emitting diode of the plurality of white light emitting diodes is configured to illuminate the sample from one direction of a plurality of directions.

7. The method (40) according to claim 5 or 6, wherein each digital color image of the input set of digital color images is captured (S408-2) using a microscope objective, and wherein at least one direction of the plurality of directions corresponds to an angle larger than a numerical aperture of the microscope objective.

8. A device (10) for training a machine learning model to construct a high-resolution digital color image depicting a sample, the device comprising circuitry (100) configured to execute:
a first receiving function (1100) configured to receive a training set of digital color images of a training sample, wherein the received training set of digital color images of the training sample is formed by:
illuminating, by a plurality of white light emitting diodes, the training sample with a plurality of illumination patterns, and
capturing, for each illumination pattern of the plurality of illumination patterns, a digital color image of the training sample;
wherein the circuitry is further configured to execute:
a second receiving function (1102) configured to receive a ground truth comprising a high-resolution digital color image of the training sample, wherein a resolution of the high-resolution digital color image is relatively higher than a resolution of at least one digital color image of the training set of digital color images; and
a training function (1104) configured to train the machine learning model to construct the high-resolution digital color image depicting a sample using the training set of digital color images and the ground truth.

9. A microscope system (20) comprising:
an illumination system (260) comprising a plurality of white light emitting diodes and configured to illuminate a sample (292) with a plurality of illumination patterns (262);
an image sensor (270) configured to capture digital color images of the sample (292);
a microscope objective (280) configured to image the sample (292) onto the image sensor (270); and
circuitry (200) configured to execute:
an acquisition function (2100) configured to acquire an input set of digital color images by being configured to:
control the plurality of white light emitting diodes of the illumination system (260) to illuminate the sample (292) with each illumination pattern of the plurality of illumination patterns (262), and
control the image sensor (270) to capture a digital color image of the sample (292) for each illumination pattern of the plurality of illumination patterns (262), and
wherein the circuitry (200) is further configured to execute:
an image construction function (2102) configured to:
input the input set of digital color images into a machine learning model being trained according to the method (30) of any one of claims 1-4, and
receive, from the machine learning model, an output comprising a constructed digital color image (704) depicting the sample;
wherein a resolution of the constructed digital color image is relatively higher than a resolution of at least one digital color image of the input set of digital color images.

10. The microscope system (20) according to claim 9, wherein each of the plurality of white light emitting diodes is configured to illuminate the sample from one direction of a plurality of directions.

11. The microscope system (20) according to claim 10, wherein at least one direction of the plurality of directions corresponds to an angle larger than a numerical aperture of the microscope objective (280).

12. The microscope system (20) according to any one of claims 9-11, wherein the plurality of white light emitting diodes is arranged on a curved surface (264) being concave along at least one direction along the surface.

13. The microscope system according to claim 12, wherein the curved surface (264) is formed of facets (265).

14. The microscope system according to any one of claims 9-13, wherein a numerical aperture of the microscope objective is 0.4 or lower.

15. A non-transitory computer-readable storage medium comprising program code portions which, when executed on a device having processing capabilities, performs the method according to any one of claims 5-7.

## Patentansprüche

1. Verfahren (30) zum Trainieren eines maschinellen Lernmodells zum Konstruieren eines hochauflösenden digitalen Farbbildes, das eine Probe darstellt, wobei das Verfahren umfasst:
Erfassen (S300) eines Trainingssatzes digitaler Farbbilder einer Trainingsprobe durch:
Beleuchten (S302), durch eine Vielzahl weißer Leuchtdioden, der Trainingsprobe mit einer Vielzahl von Beleuchtungsmustern, und
Aufnehmen (S304), für jedes Beleuchtungsmuster der Vielzahl von Beleuchtungsmustern, eines digitalen Farbbildes der Trainingsprobe;
Empfangen (S306) einer Ground Truth, die ein hochauflösendes digitales Farbbild der Trainingsprobe umfasst, wobei eine Auflösung des hochauflösenden digitalen Farbbildes relativ höher ist als eine Auflösung mindestens eines digitalen Farbbildes des Trainingssatzes digitaler Farbbilder; und
Trainieren (S308) des maschinellen Lernmodells, um das hochauflösende digitale Farbbild, das eine Probe darstellt, zu konstruieren, unter Verwendung des Trainingssatzes digitaler Farbbilder und der Ground Truth.

2. Verfahren (30) nach Anspruch 1, wobei mindestens ein digitales Farbbild des Trainingssatzes digitaler Farbbilder unter Verwendung eines ersten Mikroskopobjektivs aufgenommen wird, und wobei die Handlung des Empfangens (S306) der Ground Truth umfasst:
Beleuchten (S310) der Trainingsprobe mit einem Hellfeld-Beleuchtungsmuster; und
Aufnehmen (S312), unter Verwendung eines zweiten Mikroskopobjektivs, des hochauflösenden digitalen Farbbildes der Trainingsprobe, während die Trainingsprobe mit dem Hellfeld-Beleuchtungsmuster beleuchtet wird,
wobei eine numerische Apertur des zweiten Mikroskopobjektivs höher ist als eine numerische Apertur des ersten Mikroskopobjektivs.

3. Verfahren (30) nach Anspruch 1 oder 2, wobei jede weiße Leuchtdiode der Vielzahl weißer Leuchtdioden dazu ausgelegt ist, die Trainingsprobe aus einer Richtung einer Vielzahl von Richtungen zu beleuchten.

4. Verfahren (30) nach Anspruch 3, wobei mindestens ein digitales Farbbild des Trainingssatzes digitaler Farbbilder unter Verwendung eines ersten Mikroskopobjektivs aufgenommen wird (S304), und wobei mindestens eine Richtung der Vielzahl von Richtungen einem Winkel entspricht, der größer ist als eine numerische Apertur des ersten Mikroskopobjektivs.

5. Verfahren (40) zum Konstruieren eines hochauflösenden digitalen Farbbildes, das eine Probe darstellt, wobei das Verfahren (40) umfasst:
Empfangen (S400) eines Eingabesatzes digitaler Farbbilder der Probe, wobei der Eingabesatz digitaler Farbbilder durch Beleuchten, durch eine Vielzahl weißer Leuchtdioden, der Probe mit einer Vielzahl von Beleuchtungsmustern und Aufnehmen, für jedes Beleuchtungsmuster der Vielzahl von Beleuchtungsmustern, eines digitalen Farbbildes der Probe erfasst wird;
Konstruieren (S402) eines hochauflösenden digitalen Farbbildes, das die Probe darstellt, durch:
Eingeben (S404) des Eingabesatzes digitaler Farbbilder in ein maschinelles Lernmodell, das gemäß dem Verfahren nach einem der Ansprüche 1-4 trainiert wird, und
Empfangen (S406), vom maschinellen Lernmodell, einer Ausgabe, die das konstruierte hochauflösende digitale Farbbild umfasst, das eine Probe darstellt,
wobei eine Auflösung des konstruierten digitalen Farbbildes relativ höher ist als eine Auflösung mindestens eines digitalen Farbbildes des Eingabesatzes digitaler Farbbilder.

6. Verfahren (40) nach Anspruch 5, wobei jede weiße Leuchtdiode der Vielzahl weißer Leuchtdioden dazu ausgelegt ist, die Probe aus einer Richtung einer Vielzahl von Richtungen zu beleuchten.

7. Verfahren (40) nach Anspruch 5 oder 6, wobei jedes digitale Farbbild des Eingabesatzes digitaler Farbbilder unter Verwendung eines Mikroskopobjektivs aufgenommen wird (S408-2), und wobei mindestens eine Richtung der Vielzahl von Richtungen einem Winkel entspricht, der größer ist als eine numerische Apertur des Mikroskopobjektivs.

8. Vorrichtung (10) zum Trainieren eines maschinellen Lernmodells zum Konstruieren eines hochauflösenden digitalen Farbbildes, das eine Probe darstellt, wobei die Vorrichtung eine Schaltungsanordnung (100) umfasst, die ausgelegt ist zum Ausführen von:
einer ersten Empfangsfunktion (1100), die ausgelegt ist zum Empfangen eines Trainingssatzes digitaler Farbbilder einer Trainingsprobe, wobei der empfangene Trainingssatz digitaler Farbbilder der Trainingsprobe gebildet wird durch:
Beleuchten, durch eine Vielzahl weißer Leuchtdioden, der Trainingsprobe mit einer Vielzahl von Beleuchtungsmustern, und
Aufnehmen, für jedes Beleuchtungsmuster der Vielzahl von Beleuchtungsmustern, eines digitalen Farbbildes der Trainingsprobe;
wobei die Schaltungsanordnung ferner ausgelegt ist zum Ausführen von:
einer zweiten Empfangsfunktion (1102), die ausgelegt ist zum Empfangen einer Ground Truth, die ein hochauflösendes digitales Farbbild der Trainingsprobe umfasst, wobei eine Auflösung des hochauflösenden digitalen Farbbildes relativ höher ist als eine Auflösung mindestens eines digitalen Farbbildes des Trainingssatzes digitaler Farbbilder; und
einer Trainingsfunktion (1104), die ausgelegt ist zum Trainieren des maschinellen Lernmodells, um das hochauflösende digitale Farbbild, das eine Probe darstellt, zu konstruieren, unter Verwendung des Trainingssatzes digitaler Farbbilder und der Ground Truth.

9. Mikroskopsystem (20), umfassend:
ein Beleuchtungssystem (260), das eine Vielzahl weißer Leuchtdioden umfasst und ausgelegt ist zum Beleuchten einer Probe (292) mit einer Vielzahl von Beleuchtungsmustern (262);
einen Bildsensor (270), der ausgelegt ist zum Aufnehmen digitaler Farbbilder der Probe (292);
ein Mikroskopobjektiv (280), das ausgelegt ist zum Abbilden der Probe (292) auf den Bildsensor (270); und
eine Schaltungsanordnung (200), die ausgelegt ist zum Ausführen von:
einer Erfassungsfunktion (2100), die ausgelegt ist zum Erfassen eines Eingabesatzes digitaler Farbbilder, indem sie ausgelegt ist zum:
Steuern der Vielzahl weißer Leuchtdioden des Beleuchtungssystems (260), um die Probe (292) mit jedem Beleuchtungsmuster der Vielzahl von Beleuchtungsmustern (262) zu beleuchten, und
Steuern des Bildsensors (270), um ein digitales Farbbild der Probe (292) für jedes Beleuchtungsmuster der Vielzahl von Beleuchtungsmustern (262) aufzunehmen, und
wobei die Schaltungsanordnung (200) ferner ausgelegt ist zum Ausführen von:
einer Bildkonstruktionsfunktion (2102), die ausgelegt ist zum:
Eingeben des Eingabesatzes digitaler Farbbilder in ein maschinelles Lernmodell, das gemäß dem Verfahren (30) nach einem der Ansprüche 1-4 trainiert wird, und
Empfangen, vom maschinellen Lernmodell, einer Ausgabe, die ein konstruiertes digitales Farbbild (704) umfasst, das die Probe darstellt;
wobei eine Auflösung des konstruierten digitalen Farbbildes relativ höher ist als eine Auflösung mindestens eines digitalen Farbbildes des Eingabesatzes digitaler Farbbilder.

10. Mikroskopsystem (20) nach Anspruch 9, wobei jede der Vielzahl weißer Leuchtdioden dazu ausgelegt ist, die Probe aus einer Richtung einer Vielzahl von Richtungen zu beleuchten.

11. Mikroskopsystem (20) nach Anspruch 10, wobei mindestens eine Richtung der Vielzahl von Richtungen einem Winkel entspricht, der größer als eine numerische Apertur des Mikroskopobjektivs (280) ist.

12. Mikroskopsystem (20) nach einem der Ansprüche 9-11, wobei die Vielzahl weißer Leuchtdioden auf einer gekrümmten Oberfläche (264) angeordnet ist, die entlang mindestens einer Richtung entlang der Oberfläche konkav ist.

13. Mikroskopsystem nach Anspruch 12, wobei die gekrümmte Oberfläche (264) aus Facetten (265) gebildet ist.

14. Mikroskopsystem nach einem der Ansprüche 9-13, wobei eine numerische Apertur des Mikroskopobjektivs 0,4 oder weniger beträgt.

15. Nichtflüchtiges computerlesbares Speichermedium, das Programmcodeabschnitte umfasst, die bei Ausführung auf einer Vorrichtung mit Verarbeitungsfähigkeiten das Verfahren nach einem der Ansprüche 5-7 durchführen.

## Revendications

1. Procédé (30) d'entraînement d'un modèle d'apprentissage automatique pour construire une image numérique en couleurs à haute résolution représentant un échantillon, le procédé comprenant les étapes suivantes : acquérir (S300) un ensemble d'entraînement d'images numériques en couleurs d'un échantillon d'entraînement :
en éclairant (S302), par une pluralité de diodes électroluminescentes blanches, l'échantillon d'apprentissage avec une pluralité de motifs d'éclairage, et
en capturant (S304), pour chaque motif d'éclairage de la pluralité de motifs d'éclairage, une image numérique en couleurs de l'échantillon d'entraînement ;
en recevant (S306) une vérité de terrain comprenant une image numérique en couleurs à haute résolution de l'échantillon d'entraînement, où une résolution de l'image numérique en couleurs à haute résolution est relativement plus élevée qu'une résolution d'au moins une image numérique en couleurs de l'ensemble d'entraînement d'images numériques en couleurs ; et
en entraînant (S308) le modèle d'apprentissage automatique pour construire l'image numérique en couleurs à haute résolution représentant un échantillon à l'aide de l'ensemble d'entraînement d'images numériques en couleurs et de la vérité de terrain.

2. Procédé (30) selon la revendication 1, dans lequel au moins une image numérique en couleurs de l'ensemble d'entraînement d'images numériques en couleurs est capturée à l'aide d'un premier objectif de microscope, et dans lequel l'acte de réception (S306) de la vérité de terrain comprend les étapes suivantes :
éclairer (S310) l'échantillon d'entraînement avec un motif d'éclairage en champ clair ; et
capturer (S312), à l'aide d'un second objectif de microscope, l'image numérique en couleurs à haute résolution de l'échantillon d'entraînement pendant que l'échantillon d'entraînement est éclairé avec le modèle d'éclairage en champ clair,
où l'ouverture numérique du second objectif de microscope est supérieure à l'ouverture numérique du premier objectif de microscope.

3. Procédé (30) selon la revendication 1 ou la revendication 2, dans lequel chaque diode électroluminescente blanche de la pluralité de diodes électroluminescentes blanches est configurée pour éclairer l'échantillon d'entraînement à partir d'une direction parmi une pluralité de directions.

4. Procédé (30) selon la revendication 3, dans lequel au moins une image numérique en couleurs de l'ensemble d'images numériques en couleurs d'entraînement est capturée (S304) à l'aide d'un premier objectif de microscope, et dans lequel au moins une direction de la pluralité de directions correspond à un angle plus grand qu'une ouverture numérique du premier objectif de microscope.

5. Procédé (40) de construction d'une image numérique en couleurs à haute résolution représentant un échantillon, le procédé (40) comprenant les étapes suivantes :
recevoir (S400) un ensemble d'images numériques en couleurs de l'échantillon, l'ensemble d'images numériques en couleurs étant acquis en éclairant l'échantillon par une pluralité de diodes électroluminescentes blanches avec une pluralité de motifs d'éclairage et en capturant, pour chaque motif d'éclairage de la pluralité de motifs d'éclairage, une image numérique en couleurs de l'échantillon ;
construire (S402) une image numérique en couleurs à haute résolution représentant l'échantillon :
en entrant (S404) l'ensemble d'images numériques en couleurs d'entrée dans un modèle d'apprentissage automatique étant entraîné selon le procédé de l'une quelconque des revendications 1 à 4, et
en recevant (S406), depuis le modèle d'apprentissage automatique, une sortie comprenant l'image numérique en couleurs à haute résolution construite représentant un échantillon,
la résolution de l'image numérique en couleurs construite étant relativement plus élevée que la résolution d'au moins une image numérique en couleurs de l'ensemble d'images numériques en couleurs d'entrée.

6. Procédé (40) selon la revendication 5, dans lequel chaque diode électroluminescente blanche de la pluralité de diodes électroluminescentes blanches est configurée pour éclairer l'échantillon à partir d'une direction parmi une pluralité de directions.

7. Procédé (40) selon la revendication 5 ou la revendication 6, dans lequel chaque image numérique en couleurs de l'ensemble d'images numériques en couleurs d'entrée est capturée (S408-2) à l'aide d'un objectif de microscope, et dans lequel au moins une direction de la pluralité de directions correspond à un angle plus grand qu'une ouverture numérique de l'objectif de microscope.

8. Dispositif (10) pour l'entraînement d'un modèle d'apprentissage automatique afin de construire une image numérique en couleurs à haute résolution représentant un échantillon, le dispositif comprenant des circuits (100) configurés pour exécuter :
une première fonction de réception (1100) configurée pour recevoir un ensemble d'entraînement d'images numériques en couleurs d'un échantillon d'entraînement, où l'ensemble d'entraînement reçu d'images numériques en couleurs de l'échantillon d'entraînement est formé :
en éclairant, par une pluralité de diodes électroluminescentes blanches, l'échantillon d'entraînement avec une pluralité de motifs d'éclairage, et
en capturant, pour chaque motif d'éclairage de la pluralité de motifs d'éclairage, une image numérique en couleurs de l'échantillon d'entraînement ;
dans lequel les circuits sont en outre configurés pour exécuter :
une deuxième fonction de réception (1102) configurée pour recevoir une vérité de terrain comprenant une image numérique en couleurs à haute résolution de l'échantillon d'apprentissage, où une résolution de l'image numérique en couleurs à haute résolution est relativement plus élevée qu'une résolution d'au moins une image numérique en couleurs de l'ensemble d'entraînement d'images numériques en couleurs ; et
une fonction d'entraînement (1104) configurée pour entraîner le modèle d'apprentissage automatique pour construire l'image numérique en couleurs à haute résolution représentant un échantillon à l'aide de l'ensemble d'entraînement d'images numériques en couleurs et de la vérité de terrain.

9. Système de microscope (20) comprenant :
un système d'éclairage (260) comprenant une pluralité de diodes électroluminescentes blanches et configuré pour éclairer un échantillon (292) avec une pluralité de motifs d'éclairage (262) ;
un capteur d'image (270) configuré pour capturer des images numériques en couleurs de l'échantillon (292) ;
un objectif de microscope (280) configuré pour produire une image de l'échantillon (292) sur le capteur d'image (270) ; et
des circuits (200) configurés pour exécuter :
une fonction d'acquisition (2100) configurée pour acquérir un ensemble d'images numériques en couleurs d'entrée en étant configurée pour :
commander la pluralité de diodes électroluminescentes blanches du système d'éclairage (260) pour éclairer l'échantillon (292) avec chaque motif d'éclairage de la pluralité de motifs d'éclairage (262), et
commander le capteur d'image (270) pour capturer une image numérique en couleurs de l'échantillon (292) pour chaque motif d'éclairage de la pluralité de motifs d'éclairage (262), et
dans lequel les circuits (200) sont en outre configurés pour exécuter :
une fonction de construction d'image (2102) configurée pour :
entrer l'ensemble d'images numériques en couleurs d'entrée dans un modèle d'apprentissage automatique étant entraîné selon le procédé (30) de l'une quelconque des revendications 1 à 4, et
recevoir, depuis le modèle d'apprentissage automatique, une sortie comprenant une image numérique en couleurs construite (704) représentant l'échantillon ;
la résolution de l'image couleur numérique construite étant relativement plus élevée que la résolution d'au moins une image couleur numérique de l'ensemble d'images couleur numériques d'entrée.

10. Système de microscope (20) selon la revendication 9, dans lequel chacune de la pluralité de diodes électroluminescentes blanches est configurée pour éclairer l'échantillon à partir d'une direction parmi une pluralité de directions.

11. Système de microscope (20) selon la revendication 10, dans lequel au moins une direction de la pluralité de directions correspond à un angle plus grand qu'une ouverture numérique de l'objectif de microscope (280).

12. Système de microscope (20) selon l'une quelconque des revendications 9 à 11, dans lequel la pluralité de diodes électroluminescentes blanches sont disposées sur une surface incurvée (264) concave le long d'au moins une direction de la surface.

13. Système de microscope selon la revendication 12, dans lequel la surface courbe (264) est formée de facettes (265).

14. Système de microscope selon l'une quelconque des revendications 9 à 13, dans lequel l'ouverture numérique de l'objectif de microscope est inférieure ou égale à 0,4.

15. Support de stockage non transitoire lisible par ordinateur comprenant des portions de code de programme qui, lorsqu'elles sont exécutées sur un dispositif ayant des capacités de traitement, exécutent le procédé selon l'une quelconque des revendications 5 à 7.
